# EUROPÄISCHE PATENTSCHRIFT

(11) **EP 1 479 042 B1**
(45) Veröffentlichungstag und Bekanntmachung des Hinweises auf die Patenterteilung: **24.08.2005**
(21) Anmeldenummer: 03704256.1
(22) Anmeldetag: 27.01.2003
(51) Int. Cl.: G06K 19/077

(54) **DATENTRÄGERKARTE**
DATA-CARRIER CARD
CARTE SUPPORT DE DONNEES

(30) Priorität: 26.02.2002 DE 10208168
(43) Veröffentlichungstag der Anmeldung: 24.11.2004
(73) Patentinhaber: Infineon Technologies AG, 81669 München (DE)
(72) Erfinder: FISCHER, Jürgen, 93180 Deuerling (DE); PALM, Herbert, 85635 Höhenkirchen (DE); PÜSCHNER, Frank, 93309 Kelheim (DE); WILLER, Josef, 85521 Riemerling (DE)
(74) Vertreter: Epping - Hermann - Fischer
(86) Internationale Anmeldenummer: PCT/DE2003/000215
(87) Internationale Veröffentlichungsnummer: WO 2003/073372

(56) Entgegenhaltungen:
- DE-A- 19 701 163
- DE-A- 19 844 965
- FR-A- 2 789 505
- US-B1- 6 198 044

## Beschreibung

Die Erfindung betrifft eine Datenträgerkarte mit einem flächigen Kartenkörper, der eine Aussparung aufweist, in die ein Chip eingesetzt ist und mit Außenkontaktelementen, die über Leiterzüge mit dem Chip elektrisch verbunden sind.

Bei Datenträgerkarten der genannten Art werden ein oder mehrere Chips beispielsweise in Nacktchipmontage auf sogenannte MID-Leiterbahnen aufgebracht und anschließend mit einer Kunststoffmasse vergossen. Anschließend wird die Aussparung mit einem Deckel verschlossen, wobei der Deckel zumindest die Aussparung abdeckt. In vielen Fällen wird sogar die gesamte flächige Seite der Datenträgerkarte abgedeckt, die die Aussparung enthält. Der Begriff "MID" steht für "Moulded Interconnect Device", also räumlicher, spritzgegossener Schaltungsträger. Hinter dem Begriff "MID-Leiterbahnen" verbirgt sich somit die Ausbildung von dreidimensional verlaufenden Leiterbahnen, die üblicherweise auf einem dreidimensional strukturierten Substrat aufgebracht sind.

Die Datenträgerkarten werden häufig als Chipkarten bezeichnet, nachdem in der Regel ein Chip als Datenspeicher oder als Datenprozessor enthalten ist. Bei solchen Datenträgerkarten wird entweder ein Modul aus einer kleinen Leiterplatte mit einem darauf montierten Chip oder ein auf einem Leiterrahmen montierter, mit Kunststoff umspritzter Chip in die Aussparung des Kartenkörpers eingesetzt. Zur Datenübertragung nach außen hin oder in Richtung auf die Karte müssen lediglich Kontakte freigehalten werden. Es ist auch eine kontaktlose Übertragung über Sende- und Empfangseinheiten prinzipiell möglich.

Eine Datenträgerkarte, bei der ein Chip in Nacktmontage in der Aussparung montiert und mit MID-Leiterbahnen kontaktiert ist, ist aus der DE 196 01 203 A1 bekannt. Um den Chip mechanisch oder vor Korrosion zu schützen, wird eine Kunststoffabdeckmasse in die Aussparung eingebracht, so daß sie diese bedeckt oder ausfüllt. Anschließend wird auf der Seite, auf der der Chip in die Aussparung eingesetzt wurde, ein Deckel aufgebracht. Die flächigen Seiten der Datenträgerkarte können durch Bedrucken oder Etikettieren fertiggestellt werden.

Eine alternative Datenträgerkarte ist in der DE 196 15 980 A1 beschrieben. Diese umfaßt einen vorgefertigten einstückigen bzw. einteiligen Verbund aus Kartengrundkörper, Deckel und einer dazwischenliegenden, zum Umklappen des Deckels verwendeten flexiblen Zone aus dem gleichen Material. Die Datenträgerkarte, die eine Aussparung aufweist, kann mit einem oder mehreren Chips versehen werden und anschließend mit dem Dekkel, der einstückig mit dem Kartengrundkörper ausgebildet ist, verschlossen werden. Dabei wird der Deckel über einen zwischenliegenden flexiblen Bereich wie über ein Scharnier umgeklappt und auf der flächigen Seite des Kartenkörpers auf der Aussparung befestigt. Diese Anordnung vermeidet somit die Bereitstellung von zwei getrennten Teilen, dem Kartengrundkörper und dem Deckel. Leiterbahnen, die von einer Oberfläche des Kartengrundkörpers in die Aussparung hinein verlaufen, um dort eine elektrische Verbindung zu dem in die Aussparung eingesetzten Chip herzustellen, sind in MID-Technik ausgeführt.

Die beiden aus dem Stand der Technik bekannten Datenträgeranordnungen weisen den Nachteil auf, daß die auf einem dreidimensional strukturierten Substrat aufgebrachten Leiterbahnen nur mit einem aufwendigen Herstellungsverfahren erzeugbar sind. Ein Hersteller solcher Datenträgeranordnungen muß gleichermaßen Spritzgießverfahren wie auch Fertigungskenntnisse im Bereich von strukturierten Metallen besitzen.

Darüber hinaus gestaltet sich die elektrische Funktionsprüfung bei den beschriebenen Datenträgerkarten schwieriger. Es ist üblich, nach der Herstellung der elektrischen Verbindung zwischen einem Chip und den Leiterzügen die elektrische Funktionsfähigkeit nochmals zu überprüfen. Bei den häufig eingesetzten Bondverfahren treten nämlich hohe Temperaturen auf, die einen an sich funktionsfähigen Halbleiterchip beschädigen können. Die Überprüfung ist jedoch erst dann möglich, wenn der Chip bereits in den Kartenkörper eingebaut wurde. Bei einer Beschädigung des Chips muß folglich auch ein an sich fehlerfreier Kartenkörper mit den aufwendig hergestellten MID-Leiterbahnen als Ausschuß weggeworfen werden.

FR-A-2 789 505 offenbart bereits eine Datenträgerkarte, bei der der Chip auf einem flexiblen Träger angeordnet ist. Die Außenkontaktelemente sind auf der gleichen Seite des Trägers angeordnet und durch Leiterbahnen mit dem Chip verbunden. Der Bereich des Trägers auf dem sich der Chip befindet ist in der Aussparung der Karte hineingedrückt und dort befestigt.

Die Aufgabe der vorliegenden Erfindung besteht deshalb darin, eine einfacher montierbare Datenträgerkarte anzugeben, die die oben genannten Nachteile nicht aufweist.

Diese Aufgabe wird mit einer Datenträgerkarte gemäß den Merkmalen des Anspruches 1 gelöst. Vorteilhafte Ausgestaltungen ergeben sich aus den abhängigen Ansprüchen.

Die erfindungsgemäße Datenträgerkarte sieht ebenso vor, den oder die Chips nicht direkt in die Aussparung eines flächigen Kartenkörpers einzusetzen, sondern statt dessen auf einem Träger anzuordnen. Der Träger nimmt gleichfalls die Außenkontaktelemente, die über Leiterzüge mit in dem Chip verbunden sind, auf. Dabei ist vorgesehen, die Außenkontaktelemente und den Chip auf der gleichen Seite eines Trägers anzuordnen.

Somit ist eine elektrische Funktionsprüfung der Anordnung bereits vor dem Einbau in die Aussparung des Kartenkörpers möglich. Defekte Chips bzw. defekte Chipanoränungen, unter der nachfolgend zumindest ein auf einem Träger angeordneter Chip verstanden wird, können folglich vor dem Einbau in den Kartenkörper als Ausschuß aussortiert werden.

Chipanordnungen, die neben dem Chip auch Außenkontaktelemente tragen, sind prinzipiell aus dem Bereich der Chipkarten bekannt und werden dort als Chipmodule bezeichnet. Bei der hier verwendeten Chipanordnung handelt es sich jedoch nicht um ein derartiges aus dem Stand der Technik bekanntes Chipmodul. Dort werden üblicherweise die Außenkontaktelemente und der Chip auf gegenüberliegenden Seiten des Trägers angeordnet. Zur elektrischen Kontaktierung sind somit Kontaktelemente, die durch den Träger hindurchreichen, notwendig. Diese Kontaktelemente, die auch als Durchkontaktierung bezeichnet werden, erfordern jedoch bei der Herstellung der Chipanordnung eine Vielzahl an Verfahrensschritten. Die Erfindung verwendet die wesentlich einfachere Herstellung, indem die Außenkontaktelemente und der Chip auf der gleichen Seite des Trägers angeordnet werden.

Vorzugsweise erstreckt sich der Träger dreidimensional in der Aussparung des flächigen Kartenkörpers. Der Träger könnte dabei von vornherein in der dreidimensionalen Form der Aussparung ausgebildet sein, so daß dieser überwiegend an den Flächen der Aussparung anliegt. Bevorzugt ist der Träger flexibel ausgebildet, so daß dieser zunächst während der Herstellung der Chipanordnung eben ausgebildet ist. Erst nachdem die Außenkontaktelemente und der bzw. die Chips samt Leiterzügen auf dem Träger ausgebracht und elektrisch überprüft wurden, wird dieser der Form der Aussparung angepaßt. Der Träger verläuft dabei entlang des Bodens der Aussparung.

Zweckmäßigerweise weist der Träger deshalb eine Trägerschicht aus einem flexiblen Material, z. B. Polymid, PET, PEN, ... auf, wodurch das Einbringen in die Aussparung und das Anschmiegen an deren Form erleichtert wird.

Da die Außenkontaktelemente und der bzw. die Chips in zwei, vorzugsweise parallel verlaufenden und gegeneinander versetzten Ebenen gelegen sind, ist es vorteilhaft, wenn der Boden eine (flache) Rampe aufweist, so daß eine zu starke Biegung des Trägers beim Einbringen in die Aussparung vermieden wird. Sofern sowohl der Träger als auch die Leiterzüge aus einem hochflexiblen Material bestehen, wäre es natürlich auch denkbar, die Aussparung stufenförmig auszubilden.

Die Leiterzüge sind vorzugsweise auf dem Träger angeordnet. Hierdurch ergibt sich die Möglichkeit einer vollständigen Fertigung und Prüfung der Chipanordnung.

Um ein Abreißen oder Abknicken der Leiterzüge zu verhindern, bestehen die Leiterzüge vorzugsweise aus dehnbarem Material.

Gemäß der Erfindung steht ein die Aussparung bedeckender Deckel derart in Wirkverbindung mit dem Träger, daß dieser, entlang des Bodens, in der Aussparung gehalten wird. Der aus einem flexiblen Material bestehende Träger wird folglich durch den Deckel in die Aussparung gedrückt und dort gehalten. Die Halterung kann beispielsweise durch eine Einrastverbindung zwischen dem Deckel und dem Kartenkörper erfolgen. Eine Klebung oder Schweißung zur Fixierung des Trägers sowie zur Fixierung des Deckels ist somit nicht notwendig, aber trotzdem denkbar. Durch den Verzicht auf eine Klebung oder Schweißung ist weder der Kartenkörper noch der Träger mit den darauf befestigten Chips einer Temperaturbelastung ausgesetzt. Die Zuverlässigkeit der gesamten Anordnung wird hierdurch erhöht. Darüber hinaus ist eine kostengünstige Fertigung möglich.

Der Deckel ist in einer Weiterbildung mit zumindest einem Vorsprung versehen, welcher lösbar mit dem Kartenkörper verbunden ist. Der Deckel kann aus gleichem oder unterschiedlichem Material wie der Kartenkörper bestehen. Er kann als separates Bauteil gefertigt werden oder einstückig mit dem Kartenkörper verbunden sein.

Auf dem Deckel kann ein Etikett aufgebracht sein. Dieses kann bereits vor dem Verbinden des Deckels mit dem Kartenkörper auf diesem aufgebracht sein. Das Vorsehen eines Etiketts auf der der Aussparung des Kartenkörpers gegenüberliegenden Oberfläche ist ebenfalls denkbar.

Vorzugsweise stellt die erfindungsgemäße Datenträgerkarte eine Multimediakarte dar, die mit Etiketten auf der Vorderseite und der Rückseite versehen ist.

Die Erfindung wird anhand der nachfolgenden Figuren näher erläutert. Es zeigen:
Figur 1 ein Ausführungsbeispiel der erfindungsgemäßen Datenträgerkarte vor dem Verbinden des Deckels mit dem Kartenkörpers,
Figur 2 eine Datenträgerkarte, bei der der Deckel mit dem Kartenkörper verbunden ist, und
Figur 3 ein zweites Ausführungsbeispiel einer Datenträgerkarte, bei der der Deckel mit dem Kartenkörper verbunden ist.

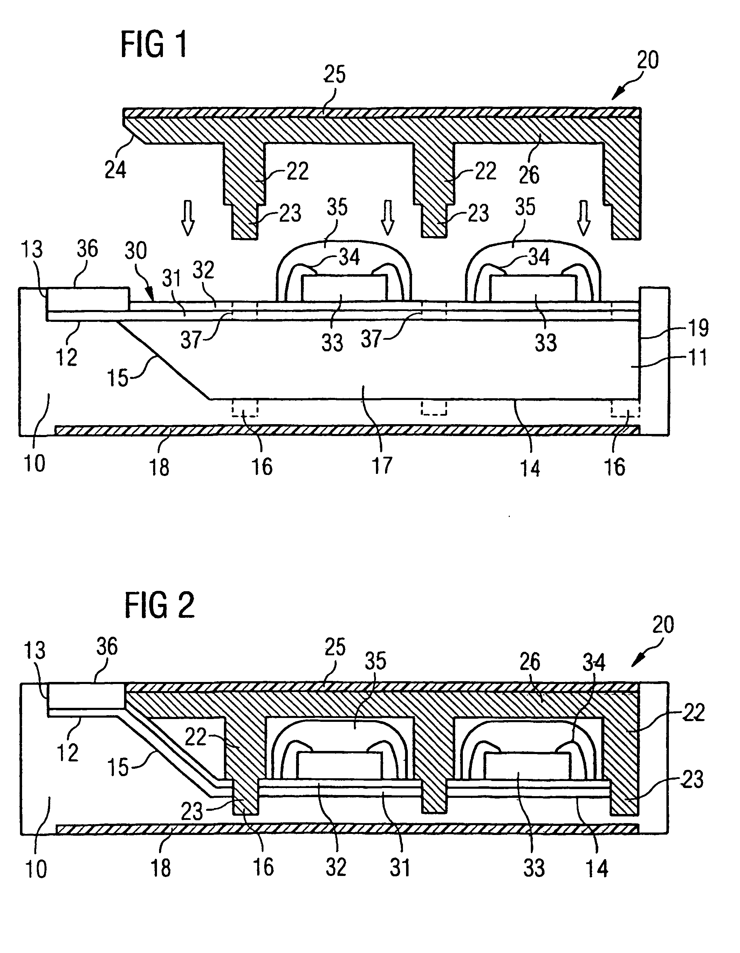

Figur 1 zeigt ein erstes Ausführungsbeispiel einer erfindungsgemäßen Datenträgerkarte mit einem Kartenkörper 10, einem Außenkontaktelemente 36 und zwei Chips 33 aufweisenden Träger 30 sowie einem Deckel 20. Bei der Darstellung der Figur 1 ist der Deckel 20 noch nicht mit dem Kartenkörper 10 verbunden.

Der Kartenkörper 10 weist eine Aussparung 11 auf, die durch eine Seitenkante 13, eine Auflagefläche 12, einer gewinkelt abfallenden Seitenkante 15, einem Boden 14 und einer Seitenkante 19 gebildet ist. Der Boden 14 weist Bohrungen 16 auf, die zur lösbaren Befestigung des Deckels 20 vorgesehen sind. Auf der der Aussparung gegenüberliegenden Oberfläche des Kartenkörpers 10 ist ein Etikett 18 vorgesehen, das bündig in den Kartenkörper eingelassen ist.

Der Träger 30 besteht aus einer flexiblen Trägerschicht 31 und darauf aufgebrachten, vorzugsweise flexiblen Leiterzügen 32. Eine derartige Anordnung ist unter dem Namen flexible Leiterplatte oder flexible printed circuit board bekannt. Die Außenkontaktelemente 36, die Leiterzüge 32 sowie die Chips 33 sind erfindungsgemäß auf der gleichen Seite des Trägers aufgebracht.

Entgegen bekannten Anordnungen, bei denen die genannten Komponenten der Aussparung zugewandt sind, sind die Außenkontaktelemente, Leiterzüge und Chips nach außen gewandt. Wie aus Figur 1 gut hervorgeht, weist der Träger 30 zunächst eine ebene Ausgestaltung auf. Aufgrund der Flexibilität des Trägers 30 läßt sich dieser zusammen mit den Chips 33 auf einfache Weise in die Aussparung pressen.

Dies geschieht mittels des Deckels 20, der über beispielhaft drei Vorsprünge 21 verfügt. Diese weisen jeweils einen unteren Bereich 22 und einen schmäleren oberen Bereich 23 auf. Die oberen Bereiche 23 des Vorsprungs 21 werden durch Bohrungen 37 in dem Träger 30 hindurchgeführt. Beim Niederdrücken des Deckels 20 wird der Träger 30 durch die unteren Bereiche 22 der Vorsprünge 21 in die Aussparung 11 gepreßt. Die unteren Bereiche 23 greifen dabei in die Bohrungen 16 in dem Kartenkörper ein und stellen eine feste, jedoch lösbare Verbindung zwischen dem Deckel 20 und dem Kartenkörper 10 her.

Der Deckel 20 weist auf seiner linken Seite einen gewinkelten Bereich 24 auf. Wie aus der Figur 2 besser ersichtlich ist, dient dieser dazu, eine Anpreßfläche für den Träger 30 bereitzustellen.

Die Abmaße des Deckels 20, insbesondere die Länge des unteren Bereichs des Vorsprungs 22 sowie die Dicke des Deckelteils 26 sind derart bemessen, daß die Oberfläche des Deckelteils 26 bündig mit dem Kartenkörper zum Liegen kommt. Im vorliegenden Fall weist der Deckel 20 ein Etikett 25 auf, das bündig mit dem Kartenkörper 10 abschließt.

Aufgrund der Flexibilität des Trägers 30 schmiegt sich dieser an den Boden der Aussparung 11 des Kartenkörpers an. Dies ist aus der Figur 2 ersichtlich.

Die Außenkontaktelemente 36, von denen im Querschnitt lediglich eines zu sehen ist, liegen dabei auf der Auflagefläche 12 auf und sind in dem Kartenkörper bzw. der Aussparung 11 derart versenkt, daß eine ebene Oberfläche der Datenträgerkarte gewährleistet ist.

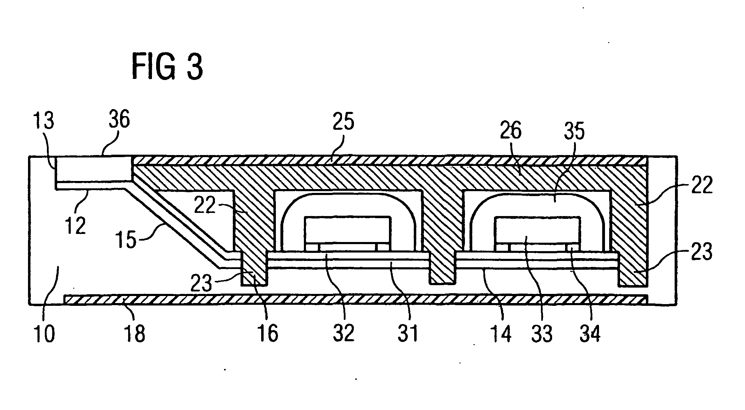

Die Chips 33 sind über Verbindungselemente 34 mit den Leiterzügen 32 auf der Trägerschicht 31 verbunden. Die Verbindungselemente 34 können dabei wie in Figur 1 und 2 gezeigt, als Bond-Drähte ausgeführt sein. In Figur 3 sind die Verbindungselemente 34 in Form von Lötkugeln ausgeführt. Prinzipiell ist natürlich jede elektrische Verbindung zwischen einem Chip 33 und den Leiterzügen 32 denkbar. Zum mechanischen Schutz der Chips 33 ist darüber hinaus eine Vergußmasse 35 vorgesehen.

Der Deckel 20 kann aus dem gleichen Material wie der Kartenkörper 10 bestehen. Die erfindungsgemäße Datenträgerkarte stellt in der in den Ausführungsbeispielen gezeigten Varianten eine sogenannte Multimediakarte dar, die ein Speichermedium für eine Vielzahl von elektronischen Geräten, wie z. B. Fotos, Computer, Kameras, CD-Player oder Ähnliches, darstellt.

Bezugszeichenliste
- 10: Kartenkörper
- 11: Vertiefung/Aussparung
- 12: Auflagefläche
- 13: Seitenkante
- 14: Boden
- 15: Rampe/Seitenkante
- 16: Bohrung
- 17: Vertiefung
- 18: Etikett
- 19: Seitenkante
- 20: Deckel
- 21: Vorsprung
- 22: Unterer Bereich des Vorsprunges
- 23: Oberer Bereich des Vorsprunges
- 24: Gewinkelter Bereich
- 25: Etikett
- 26: Deckelteil
- 30: Träger
- 31: Trägerschicht
- 32: Leiterzug
- 33: Chip
- 34: Verbidungselement
- 35: Vergußmasse
- 36: Außenkontaktelement
- 37: Aussparung

## Patentansprüche

1. Datenträgerkarte mit einem flächigen Kartenkörper (10), der eine Aussparung (11) mit einem Boden (12, 14, 15) aufweist, in die ein Chip (33) eingesetzt ist und mit Außenkontaktelementen (36), die über Leiterzüge (32) mit dem Chip (33) elektrisch verbunden sind,
wobei die Außenkontaktelemente (36) und der Chip (33) auf der gleichen Seite eines Trägers (30) angeordnet sind,
**dadurch gekennzeichnet, daß**
ein die Aussparung (11) bedeckender Deckel (20) derart in Wirkverbindung mit dem Träger (30) steht, daß dieser Träger entlang des Bodens (12, 14, 15) in der Aussparung (11) gehalten wird.

2. Datenträgerkarte nach Anspruch 1,
**dadurch gekennzeichnet, daß**
sich der Träger (30) dreidimensional in der Aussparung (11) erstreckt.

3. Datenträgerkarte nach Anspruch 2,
**dadurch gekennzeichnet, daß**
der Träger (30) entlang des Bodens (12, 14, 15) der Aussparung (11) verläuft.

4. Datenträgerkarte nach einem der vorhergehenden Ansprüche,
**dadurch gekennzeichnet, daß**
der Träger (30) eine Trägerschicht (31) aus einem flexiblen Material aufweist.

5. Datenträgerkarte nach einem der vorhergehenden Ansprüche,
**dadurch gekennzeichnet, daß**
die Leiterzüge (32) auf dem Träger (30) angeordnet sind.

6. Datenträgerkarte nach einem der vorhergehenden Ansprüche,
**dadurch gekennzeichnet, daß**
die Leiterzüge (32) dehnbar sind.

7. Datenträgerkarte nach Anspruch 1,
**dadurch gekennzeichnet, daß**
der Deckel (20) zumindest einen Vorsprung (21) aufweist, welcher lösbar mit dem Kartenkörper (10) verbunden ist.

8. Datenträgerkarte nach einem der vorhergehenden Ansprüche, die als Multimediakarte vorgesehen ist.

## Claims

1. Data carrier card with a card body (10) of a flat form, which has a recess (11) with a bottom (12, 14, 15) into which recess a chip (33) is inserted, and with external contact elements (36), which are electrically connected to the chip (33) via conductor runs (32), in which the external contact elements (36) and the chip (33) are arranged on the same side of a carrier (30), **characterized in that** a cover (20) covering the recess (11) is in operative connection with the carrier (30) in such a way that this carrier is held along the bottom (12, 14, 15) in the recess (11).

2. Data carrier card according to Claim 1, **characterized in that** the carrier (30) extends three-dimensionally in the recess (11).

3. Data carrier card according to Claim 2, **characterized in that** the carrier (30) runs along the bottom (12, 14, 15) of the recess (11).

4. Data carrier card according to one of the preceding claims, **characterized in that** the carrier (30) has a carrier layer (31) of a flexible material.

5. Data carrier card according to one of the preceding claims, **characterized in that** the conductor runs (32) are arranged on the carrier (30).

6. Data carrier card according to one of the preceding claims, **characterized in that** the conductor runs (32) are extensible.

7. Data carrier card according to Claim 1, **characterized in that** the cover (20) has at least one projection (21), which is releasably connected to the card body (10).

8. Data carrier card according to one of the preceding claims, which is intended as a multimedia card.

## Revendications

1. Carte de support de données comprenant un corps (10) plat de carte qui a un évidement (11) ayant un fond (12, 14, 15) dans lequel une puce (33) est mise et des éléments (36) de contact extérieurs qui sont reliés électriquement à la puce (33) par des pistes (32) conductrices,
dans laquelle les éléments (36) de contact extérieurs et la puce (33) sont disposés du même côté d'un support (30),
**caractérisée en ce que**
un couvercle (20) recouvrant l'évidement (11) coopère avec le support (30), de sorte que ce support est maintenu le long du fond (12, 14, 15) dans l'évidement (11).

2. Carte de support de données suivant la revendication 1,
**caractérisée en ce que** le support (30) s'étend dans les trois dimensions dans l'évidement (11).

3. Carte de support de données suivant la revendication 2,
**caractérisée en ce que** le support (30) s'étend le long du fond (12, 14, 15) de l'évidement (11).

4. Carte de support de données suivant l'une des revendications précédentes,
**caractérisée en ce que** le support (30) a une couche (31) de support en un matériau souple.

5. Carte de support de données suivant l'une des revendications précédentes,
**caractérisée en ce que** les pistes (32) conductrices sont disposées sur le support (30).

6. Carte de support de données suivant l'une des revendications précédentes,
**caractérisée en ce que** les pistes (32) conductrices sont extensibles.

7. Carte de support de données suivant la revendication 1,
**caractérisée en ce que** le couvercle (20) a au moins une saillie (21) qui est reliée de manière amovible au corps (10) de la carte.

8. Carte de support de données suivant l'une des revendications précédentes, qui est prévue comme carte multimédia.
